(19) **Europäisches Patentamt / European Patent Office / Office européen des brevets**

(11) **EP 3 919 554 A1**

(12) **EUROPEAN PATENT APPLICATION**
published in accordance with Art. 153(4) EPC

(43) Date of publication:
**08.12.2021 Bulletin 2021/49**

(21) Application number: **20748245.6**

(22) Date of filing: **30.01.2020**

(51) Int Cl.:
*C08K 5/1515* (2006.01)    *C08K 5/29* (2006.01)
*C08L 67/02* (2006.01)    *C08L 63/00* (2006.01)
*B33Y 10/00* (2015.01)    *B33Y 80/00* (2015.01)
*B29C 64/153* (2017.01)    *C08G 63/183* (2006.01)
*B33Y 70/00* (2020.01)

(86) International application number:
**PCT/JP2020/003559**

(87) International publication number:
**WO 2020/158903 (06.08.2020 Gazette 2020/32)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.01.2019 JP 2019013899**

(71) Applicants:
• **Mitsubishi Engineering-Plastics Corporation
  Tokyo 105-0021 (JP)**
• **Mitsubishi Chemical Corporation
  Chiyoda-ku
  Tokyo 100-8251 (JP)**

(72) Inventors:
• **SHOUJI Hidekazu**
  **Hiratsuka-shi, Kanagawa 254-0016 (JP)**
• **YAMANAKA Yasushi**
  **Hiratsuka-shi, Kanagawa 254-0016 (JP)**
• **KISHISHITA Minoru**
  **Tokyo 100-8251 (JP)**
• **SUGIHARA Masaki**
  **Tokyo 100-8251 (JP)**

(74) Representative: **Vossius & Partner
Patentanwälte Rechtsanwälte mbB
Siebertstraße 3
81675 München (DE)**

(54) **RESIN COMPOSITION FOR POWDER LAMINATION SHAPING METHOD, PELLETS, POWDER, METHOD FOR PRODUCING SHAPED ARTICLE, AND SHAPED ARTICLE**

(57)    To provide resin composition, a pellet and a powder for use in new powder additive manufacturing, as well as a shaped article using the same, and a method for manufacturing such shaped article. The resin composition comprises a polybutylene terephthalate that contains a terephthalic acid-derived structural unit and a 1,4-butanediol-derived structural unit, for use in powder additive manufacturing, the resin composition having a value ($\alpha$), defined by mathematical formula [1] below, of 40 or smaller:

$$\alpha = |(MVR_1 - MVR_0)/MVR_0| \times 100 \quad \cdots \quad [1] \qquad [1]$$

where,
$MVR_0$ is melt volume flow rate (in $cm^3/10$ min), and $MVR_1$ is melt volume flow rate (in $cm^3/10$ min).

EP 3 919 554 A1

**Description**

TECHNICAL FIELD

This invention relates to a resin composition, pellet and powder for use in powder additive manufacturing, a method for manufacturing a shaped article, and a shaped article.

BACKGROUND ART

Public attention have been focused on so-called 3D printing technology, by which liquid or powder is applied onto a base and then cured, to produce three-dimensional structure. The technology is specifically exemplified by (i) material extrusion by which a resin is melted by heat and extruded through a dispenser or the like, (ii) material jetting by which liquid of a photo-curable resin is jetted through a nozzle and then allowed to cure under UV irradiation, (iii) binder jetting by which liquid or powder of a photo-curable resin is jetted through a nozzle and then allowed to cure under UV irradiation, (iv) powder additive manufacturing (including multi-jet fusing) by which a powder is layered and then allowed to cure typically under heating with halogen lamp, and (v) stereolithography by which liquid of a photo-curable resin is applied and then allowed to cure under UV irradiation.

Now, Patent Literature 1 discloses a resin powder material for use in powder additive manufacturing, wherein the resin powder is a polybutylene terephthalate resin having a crystallization temperature lower than that of homopolybutylene terephthalate resin.

Patent Literature 2 discloses a resin powder for use in powder additive manufacturing, which is a mixed resin powder that contains a first thermoplastic resin material having a first melting point, and a second thermoplastic resin material having a second melting point higher than the first melting point.

Patent Literature 3 discloses a resin powder material for use in powder additive manufacturing, wherein the resin powder is a polybutylene terephthalate resin having a crystallization temperature lower than that of homopolybutylene terephthalate resin, wherein the polybutylene terephthalate resin is a copolymer that includes a resin material obtained by polycondensation of dicarboxylic acid including terephthalic acid or an ester-forming derivative thereof, with a glycol component that includes 1,4-butanediol or an ester-forming derivative thereof; and also includes, as a copolymerizable monomer, other copolymerizable dicarboxylic acid (or an ester-forming derivative thereof) or other copolymerizable diol (or an ester-forming derivative thereof), with a content of the copolymerizable component of 3 to 30 mol%, and a melting point of 200 to 215°C.

CITATION LIST

PATENT LITERATURE

[Patent Literature 1] WO2016/121013
[Patent Literature 2] WO2017/179139
[Patent Literature 3] JP 6033994 B1

SUMMARY OF THE INVENTION

TECHNICAL PROBLEM

As disclosed in the aforementioned Patent Literatures, use of polybutylene terephthalate (PBT) as a powder material for use in powder additive manufacturing has been investigated. The present inventors, however, found out from our investigations that the obtainable shaped article would have uneven appearances. Studies for clarifying the reason revealed problems below.

In powder additive manufacturing, the powder is stacked and then heated over and over on a base or the like, wherein melting under heating of the powder takes time, and this produces difference in thermal history between the layers stacked in the early stage, and those stacked in the later stage. That is, an area attributable to the powder stacked in the early stage would be more largely affected by heat, than an area attributable to the powder stacked in the later stage. Thus the obtainable shaped article would cause variation of physical property even if composed of the same powder, posing problems such as uneven appearance and variation of strength of the shaped article.

It is therefore an object of this invention to solve these problems, and is to provide a resin composition, a pellet and a powder for use in powder additive manufacturing, whose variations of physical properties between the initial stage and later stage of heat process during powder additive manufacturing are suppressed, as well as a method for manufacturing a shaped article, and a shaped article.

SOLUTION TO PROBLEM

The present inventors conducted diligent research repeatedly to solve the above-mentioned problems, and as a result, discovered that shaping of 3D structure became easier and completed shaped article which has excellent appearance and strength, etc. could be obtained by reducing difference of melt volume flow rate of a resin composition between before and after heating. Thus they completed the invention. That is, the problems described above are solved by the following means <1>, and preferably by the following means <2> to <16>.
<1> A resin composition comprising a polybutylene terephthalate that contains a terephthalic acid-derived structural unit and a 1,4-butanediol-derived structural unit, for use in powder additive manufacturing, the resin composition having a value ($\alpha$), defined by mathematical formula [1] below, of 40 or smaller:

$$\alpha = |(MVR_1 - MVR_0)/MVR_0| \times 100 \quad \cdots [1]$$

where,

MVR$_0$: melt volume flow rate (in $cm^3$/10 min) measured at a temperature 25°C higher than a melting point of the resin composition before a heat process, and under a 2.16 kg load; and
MVR$_1$: melt volume flow rate (in $cm^3$/10 min) measured at a temperature 25°C higher than the melting point of the resin composition after he heat process conducted for 24 hours at a temperature 20°C lower than the melting point of polybutylene terephthalate, and under a 2.16 kg load.

<2> The resin composition of <1>, wherein the value ($\alpha$) given by mathematical formula [1] is 10 or larger and 30 or smaller.
<3> The resin composition of <1> or <2>, wherein the polybutylene terephthalate contains the terephthalic acid-derived structural unit, the 1,4-butanediol-derived structural unit, and other structural unit other than these units.
<3-1> The resin composition of <3>, wherein the other structural unit contains isophthalic acid-derived structural unit.
<4> The resin composition of any one of <1> to <3>, wherein the polybutylene terephthalate has a melting point of 150 to 227°C (preferably 150 to 217°C).
<5> The resin composition of any one of <1> to <4>, wherein the polybutylene terephthalate has a terminal carboxy group content of 1 to 18 equivalent/ton.
<6> The resin composition of any one of <1> to <5>, containing 0.01 to 3 parts by mass of a reactive compound, per 100 parts by mass of the polybutylene terephthalate.
<6-1> The resin composition of <6>, wherein the reactive compound has a reactive group equivalent of 100 to 1000 g/eq.
<7> The resin composition of <6>, wherein the reactive compound is at least one kind selected from epoxy compound or carbodiimide compound.
<8> A resin composition comprising a polybutylene terephthalate that contains a terephthalic acid-derived structural unit and a 1,4-butanediol-derived structural unit, and 0.01 to 3 parts by mass of a reactive compound per 100 parts by mass of the polybutylene terephthalate, for use in powder additive manufacturing.
<9> The resin composition of <8>, wherein the polybutylene terephthalate contains the terephthalic acid-derived structural unit, the 1,4-butanediol-derived structural unit, and other structural unit other than these units.
<10> The resin composition of <8> or <9>, wherein the polybutylene terephthalate has a melting point of 150 to 227°C.
<11> The resin composition of any one of <8> to <10>, wherein the polybutylene terephthalate has a terminal carboxy group content of 1 to 18 equivalent/ton.
<12> The resin composition of any one of <8> to <11>, wherein the reactive compound is at least one kind selected from epoxy compound or carbodiimide compound.

<12-1> The resin composition of <12>, wherein the reactive compound has a reactive group equivalent of 100 to 1000 g/eq.
<12-2> The resin composition of any one of <1> to <12-1>, wherein the resin composition has a melting point of 227°C or lower (preferably 216°C or lower).

<13> A pellet comprising the resin composition described in any one of <1> to <12-2>, for use in powder additive manufacturing.

<14> A powder comprising the resin composition described in any one of <1> to <12-2>, for use in powder additive manufacturing.

<15> A method for manufacturing a shaped article, the method comprising obtaining a shaped article by powder additive manufacturing, with use of the powder described in <14>.

<16> A shaped article obtained by powder additive manufacturing, with use of the powder described in <14>.

ADVANTAGEOUS EFFECTS OF INVENTION

This invention enabled provision of a resin composition, a pellet and a powder for use in powder additive manufacturing, whose variations of physical properties between the initial stage and later stage of the heat process during powder additive manufacturing are suppressed, as well as a shaped article using the same, and a method for manufacturing such shaped article.

DESCRIPTION OF EMBODIMENTS

This invention will be detailed below. Note that all numerical ranges given in this patent specification, using "to" preceded and succeeded by numerals, are used to represent the ranges including these numerals respectively as the lower and upper limit values.

The resin composition of this invention is intended for use in powder additive manufacturing, which includes a polybutylene terephthalate that contains a terephthalic acid-derived structural unit and a 1,4-butanediol-derived structural unit, and the resin composition has a value ($\alpha$), defined by mathematical formula [1] below, of 40 or smaller:

$$\alpha = |(MVR_1 - MVR_0)/MVR_0| \times 100 \quad \cdots \quad [1]$$

where,

$MVR_0$: melt volume flow rate (in $cm^3/10$ min) measured at a temperature 25°C higher than a melting point of the resin composition before a heat process, and under a 2.16 kg load; and

$MVR_1$: melt volume flow rate (in $cm^3/10$ min) measured at a temperature 25°C higher than the melting point of the resin composition after the heat process conducted 24 hours at a temperature 20°C lower than the melting point of polybutylene terephthalate, and under a 2.16 kg load.

With such structure, obtainable is a resin composition for use in powder additive manufacturing, whose variation of physical property between the initial stage and later stage of the heat process during powder additive manufacturing is suppressed.

In this invention, $MVR_0 \leq MVR_1$ usually holds, and $MVR_0 = MVR_1$ more preferably holds.

The resin composition of this invention preferably has a value ($\alpha$) defined by mathematical formula [1] of 40 or smaller, which is preferably 35 or smaller, more preferably 30 or smaller, and even more preferably 25 or smaller. The lower limit value of the value ($\alpha$) is typically, but not specifically, 1 or above, and may be 5 or above, and even may be 10 or above. The value ($\alpha$) has been employed as an index that indicates change of physical property between before and after heating. The smaller the value ($\alpha$), the more unlikely the physical property would change due to heat in the heat process. With the value ($\alpha$) specified in this invention to the aforementioned upper limit value or smaller, the heat-induced difference (variation) of the physical property would be suppressed inside the shaped article, even when the resin is powderized and applied to powder additive manufacturing.

Although not specifically limited, technique of reducing the value ($\alpha$) of the resin composition typically relates to a mode of using a resin composition to which a later-described reactive compound (epoxy compound, carbodiimide compound, etc.) is added. Another mode relates to use of polybutylene terephthalate that contains a terephthalic acid-derived structural unit, a 1,4-butanediol-derived structural unit, and other structural unit other than these units (occasionally referred to as "copolymer PBT", hereinafter in this patent specification), further with the melting point and terminal carboxy group content controlled within specific ranges. For polyester or other polymers whose polymerization reaction proceeds under equilibrium, one of effective technique relates to solid state polymerization or melt polymerization, with use of a resin composition whose molecular weight is high from the beginning.

The resin composition of this invention preferably has the lower limit value of $MVR_0$ of 10 $cm^3/10$ min or above, which is more preferably 13 $cm^3/10$ min or above, and even may be 16 $cm^3/10$ min or above. The upper limit value of $MVR_0$ is preferably 26 $cm^3/10$ min or below, more preferably 25 $cm^3/10$ min or below, and even may be 24 $cm^3/10$ min

or below.

The resin composition of this invention preferably has the lower limit value of $MVR_1$ of 5 cm$^3$/10 min or above, which is more preferably 8 cm$^3$/10 min or above, even more preferably 10 cm$^3$/10 min or above, even may be 13 cm$^3$/10 min or above, and yet may be 15 cm$^3$/10 min or above. The upper limit value of $MVR_1$ is preferably 23 cm$^3$/10 min or below, and more preferably 20 cm$^3$/10 min or below.

<Polybutylene Terephthalate (A) >

The polybutylene terephthalate used in this invention (occasionally referred to as "PBT", hereinafter) has the terephthalic acid-derived structural unit and the 1,4-butanediol-derived structural unit. Polybutylene terephthalate used in this invention may be a homopolymer PBT composed only of the terephthalic acid-derived structural unit and the 1,4-butanediol-derived structural unit, or may be copolymer PBT composed of the terephthalic acid-derived structural unit and the 1,4-butanediol-derived structural unit, as well as other structural unit other than these units. Copolymer PBT is preferred.

Homopolymer PBT in the context of this patent specification conceptually means that an impurity-equivalent amount of other structural unit, other than the terephthalic acid-derived structural unit and the 1,4-butanediol-derived structural unit, may be contained.

The copolymer PBT is preferably a PBT copolymer that contains the terephthalic acid-derived structural unit and the 1,4-butanediol-derived structural unit, as well as other dicarboxylic acid component-derived structural unit, wherein the contents of the terephthalic acid-derived structural unit, the 1,4-butanediol-derived structural unit, and such other dicarboxylic acid component-derived structural unit preferably add up to 95 mol% or more.

PBT used in this invention preferably such that the terephthalic acid-derived structural unit and the 1,4-butanediol-derived structural unit serve as principal constituents in PBT. More specifically, these two structural units preferably account for more than 50 mol% of PBT, which is more preferably 75 mol% or more, more preferably 80 mol% or more, even more preferably 85 mol% or more, and also may be 88 mol% or more. The upper limit value is not specifically limited, allowing that these two structural units account for 100 mol% of homopolymer PBT.

The copolymerizable component other than terephthalic acid in PBT, employable in this invention, is exemplified by isophthalic acid, naphthalene dicarboxylic acid, and succinic acid (or possibly derivatives of them), which are dicarboxylic acid components. Diol component other than 1,4-butanediol is exemplified by ethylene glycol, diethylene glycol, 1,3-propanediol, 1,4-cyclohexanedimethanol, 2,4-diethyl-1,5-pentanediol, butyl ethylpropanediol, spiroglycol, tricyclodecanedimethanol, and 9,9-bis[4-(2-hydroxyethoxy)phenyl]fluorene. This invention is, however, not limited thereto. From among these copolymerizable components, isophthalic acid is particularly preferred, for its high availability as an industrial product, and easiness of polymer production. Two or more kinds of these polymers may be used in a combined manner.

For copolymer PBT that contains, as the copolymerizable component, dicarboxylic acid component other than terephthalic acid, content ratio of the terephthalic acid component, assuming that the total dicarboxylic acid component is 100 mol%, is preferably 65 mol% or larger, more preferably 70 mol% or larger, and even more preferably 75 mol% or larger. The upper limit value of the terephthalic acid component is preferably 95 mol% or below, more preferably 93 mol% or below, and even more preferably 91 mol% or below. For copolymer PBT that contains, as the copolymerizable component, the dicarboxylic acid component other than terephthalic acid, the content ratio of the dicarboxylic acid component other than terephthalic acid (isophthalic acid, for example), assuming that the total dicarboxylic acid component is 100 mol%, is preferably 5 mol% or larger, more preferably 7 mol% or larger, and even more preferably 9 mol%. The upper limit value of the isophthalic acid component is preferably 35 mol% or smaller, more preferably 30 mol% or smaller, and even more preferably 25 mol% or smaller. With such structure, the heat resistance will tend to improve, and a crystallinity during shaping will tend to be properly demonstrated.

In particular, when using copolymer PBT in this invention, terephthalic acid and isophthalic acid preferably account for 98 mol% or more of the total dicarboxylic acid component, which is more preferably 99 mol% or more, and even more preferably 100 mol%.

PBT in this invention preferably has an intrinsic viscosity of 0.80 dL/g or larger, which also may be 0.9 dL/g or larger. The upper limit value of the intrinsic viscosity is typically 1.50 dL/g or below, and may further be 1.0 dL/g or below.

The intrinsic viscosity may be determined by dissolving approximately 0.25 g of a polyester sample into approximately 25 mL of a mixed solvent (ratio by weight = 1/1) of phenol and 1,1,2,2-tetrachloroethane, so as to adjust the concentration to 1.00 g/dL, cooling the solution down to 30°C, and by measuring falling velocity of the sample solution and falling time in second of solvent only, at 30°C with use of a full-automatic solution viscometer. The intrinsic viscosity may be calculated from mathematical formula [2] below:

$$\text{Intrinsic viscosity} = ((1 + 4KH \cdot \eta^{sp})^{0.5} - 1)/(2KH \cdot C)$$

$$\cdots [2]$$

In the formula, given $\eta^{sp} = \eta/\eta^0 - 1$, where $\eta$ represents falling time in second of the sample solution, $\eta^0$ represents falling time in second of solvent only, C represents concentration of sample solution (g/dL), and KH represents Huggins coefficient. KH was set to 0.33. Conditions for dissolving the sample were 110°C and 30 minutes.

Full-automatic solution viscometer employable here is "SS-600-L2" from Shibayama Scientific Co., Ltd.

For the resin composition of this invention containing two or more kinds of PBT, the intrinsic viscosity is given by that of the mixture.

The resin composition of this invention preferably has a terminal carboxy group content of PBT of 1 to 20 equivalent/ton (eq/ton), which is more preferably 1 to 18 equivalent/ton. In particular, the terminal carboxy group content, when given as 18 equivalent/ton or smaller, is lower than the terminal carboxy group content of PBT obtainable under ordinary manufacturing conditions. PBT having such terminal carboxy group content is, therefore, preferably manufactured under controlled manufacturing conditions. With the terminal carboxy group content of PBT fallen within the range, the intrinsic viscosity may be effectively prevented from elevating during the heat process, particularly in the heat process in an inert gas atmosphere. Although the reason why such effect is demonstrated remains unclear, this is supposedly because progress of polycondensation in the heat process, and depolymerization caused by the diol component may be balanced in a proper ratio.

The terminal carboxy group content of PBT in this invention is more preferably 17 equivalent/ton or less, and even more preferably 15 equivalent/ton or less. The lower limit value, although not specifically limited, is preferably 1 equivalent/ton or above, more preferably 5 equivalent/ton or above, even more preferably 8 equivalent/ton or above, yet more preferably 10 equivalent/ton or above, and even may be 12 equivalent/ton or above. With the terminal carboxy group content fallen within these ranges, the effect of this invention will be notably demonstrated.

Note that the terminal carboxy group content of PBT may be determined by a method described later in EXAMPLES.

For the resin composition of this invention containing two or more types of PBT, the terminal carboxy group content is given by that of the mixture.

PBT used in this invention preferably has a melting point of 150°C or higher and 227°C or lower. With the melting point fallen on and above such lower limit value, the obtainable shaped article will be more likely to have improve heat resistance. Meanwhile, with the melting point fallen on and below such upper limit value, increase in the intrinsic viscosity and yellowing may be effectively suppressed. In particular, PBT when given as copolymer PBT can slow down the solid polymerization, effectively demonstrating the effect. Moreover, with the melting point of PBT fallen within such desired range, the obtainable shaped article will be more likely to demonstrate excellent heat resistance and strength more effectively.

The melting point is more preferably 160°C or higher, even more preferably 170°C or higher, and yet more preferably 180°C or higher. The melting point is preferably 220°C or lower, more preferably 217°C or lower, even more preferably 215°C or lower, and yet more preferably 210°C or lower.

The melting point of PBT may be measured by a method described later in EXAMPLES.

For the resin composition of this invention containing two or more types of PBT, the melting point is given by that of the mixture.

A first embodiment of PBT used in this invention preferably has an intrinsic viscosity of 0.80 to 1.0 dL/g or smaller (preferably 0.80 dL/g or larger, and smaller than 1.0 dL/g), a terminal carboxy group content of 13 equivalent/ton to 20 equivalent/ton, and a melting point of 160 to 215°C. PBT of the first embodiment is suitable for a mode in which the reactive compound is mixed to adjust the value ($\alpha$) of the resin composition, defined by mathematical formula [1], to 40 or smaller.

A second embodiment of PBT used in this invention preferably has an intrinsic viscosity of 1.0 to 1.5 dL/g or smaller, a terminal carboxy group content of 8 equivalent/ton to 17 equivalent/ton, and a melting point of 160°C to 227°C. PBT of the second embodiment is suitable for a mode in which the value ($\alpha$) of the resin composition, defined by mathematical formula [1], may be adjusted to 40 or smaller solely by PBT.

PBT used in this invention preferably has a glass transition temperature of 30°C or higher and 60°C or lower. With the glass transition temperature controlled to 30°C or higher, the obtainable shaped article will be less likely to soften, and the shaped article will be less likely to cause nonconformity. The glass transition temperature of PBT used in this invention is preferably 32°C or higher, and more preferably 34°C or higher. Meanwhile, with the glass transition temperature controlled to 60°C or lower, the shaped article will be more effectively prevented from causing uneven melting. Moreover, PBT when given as copolymer PBT can effectively suppress the shaped article from degrading its crystallinity, although depending on the copolymerizable component, whereby the heat resistance will tend to improve. The upper limit value of the glass transition temperature of PBT used in this invention is more preferably 55°C or lower, even more preferably 50°C or lower, yet more preferably 48°C or lower, and furthermore preferably 46°C or lower.

The glass transition temperature of PBT may be measured by a method described later in EXAMPLES.

Although PBT content in the resin composition of this invention is not particularly limited, PBT preferably constitutes a major part (more than 50% by mass) of the resin component of this invention, which preferably accounts for 80% by mass or more, more preferably accounts for 90% by mass or more, even more preferably accounts for 95% by mass or more, and yet more preferably accounts for 99% by mass or more.

In the resin composition of this invention, the resin component preferably accounts for 50% by mass or more of the composition, more preferably accounts for 55% by mass or more, and even more preferably accounts for 60% by mass or more.

«Method for Manufacturing PBT»

Method for manufacturing PBT used in this invention may be any of known methods without special limitation. PBT is usually obtainable by subjecting the terephthalic acid component, the 1,4-butanediol, and the optional other dicarboxylic acid component or diol component, to at least either transesterification or esterification.

In particular in a case where the copolymer PBT having the aforementioned melting point or having a terminal carboxy group content of 18 equivalent/ton or less is manufactured, an employable method is such as using a copolymerizable component (third component) together with the terephthalic acid component and the 1,4-butanediol, subjecting the mixture at least either to transesterification or esterification to obtain a lower polymer, and subjecting the thus obtained lower polymer to melt polycondensation to obtain the polymer. These reactions may be allowed to proceed in a batch system or continuous system.

The terephthalic acid component employable here includes not only terephthalic acid, but also one or two kinds of terephthalic acid derivatives such as alkyl ester (the alkyl group preferably having 1 to 3 carbon atoms, the number is more preferably 1) or halide of terephthalic acid. Also the isophthalic acid component, as the copolymerizable component, employable here includes not only isophthalic acid, but also one or two kinds of isophthalic acid derivatives such as alkyl ester (alkyl group preferably having 1 to 3 carbon atoms, the number if more preferably 1) or halide of isophthalic acid. The same will apply also to the other dicarboxylic acid component.

Method for obtaining the lower polymer is exemplified by a method of conducting at least either transesterification or esterification, with use of a single-stage or multi-stage reactor, with or without using a catalyst, and under normal or increased pressure.

Melt polycondensation method is exemplified by a method that employs heating under reduced pressure in a single-stage or multi-stage reactor in the presence of a catalyst, while distilling off the produced water or alcohol out of the system. The catalyst employable for polycondensation is exemplified by compounds of antimony, germanium, titanium and aluminum.

Besides the aforementioned catalysts, employable are additives such as reaction auxiliary, antioxidant or the like, wherein the reaction auxiliary is exemplified by phosphorus compound such as orthophosphoric acid, phosphorous acid, hypophosphorous acid, polyphosphoric acid, and esters or metal salts of them; alkali metal compounds that include sodium compounds such as sodium hydroxide and sodium benzoate, lithium compound such as lithium acetate, and potassium compounds such as potassium hydroxide and potassium acetate; and alkali earth metal compounds such as magnesium acetate and calcium acetate.

For higher reaction rate, possible conditions may include increased degree of vacuum, elevated reaction temperature, and increased rate of replacement of reaction liquid surface.

PBT obtained by melt polycondensation is usually drawn out in the form of strand or sheet, through an outlet port provided to the bottom of a melt polycondensation tank, and then cut by using a cutter while being water-cooled or after water-cooled, thereby obtaining granule in the form or pellet, chip or the like (typically having a length of approximately 3 to 10 mm).

When manufacturing PBT used in this invention, titanium compound, and typically tetrabutyl titanate is particularly preferred for use as the polycondensation catalyst. Use of the titanium compound can enjoy high catalytic activity as a whole, less contamination attributable to the catalyst, and can manufacture PBT particularly suitable for use in powder additive manufacturing. The titanium compound, as a catalyst, enables highly efficient manufacture of PBT, when separately added in a step of manufacturing lower polymer and in a step of polycondensation. Amount of addition of the titanium compound, relative to the producible PBT and in titanium element conversion, is preferably 10 to 40 ppm by mass in the step of manufacturing lower polymer, 30 to 70 ppm by mass in the step of polycondensation, totaling 40 to 110 ppm by mass. Too little total amount of addition often excessively slows down the rate of polycondensation. On the contrary, too much total amount of addition tends to intensify yellowing during the heat process. Note that the smaller the amount of addition of the titanium compound, the smaller the yellowing during the heat process. In view of reducing the yellowing during the heat process, the amount of addition of titanium compound in titanium element conversion is preferably 10 to 40 ppm by mass in the step of manufacturing lower polymer, 30 to 70 ppm by mass in the step of polycondensation, totaling 40 to 110 ppm by mass.

Method for manufacturing PBT with a relatively low melting point, or PBT with a relatively small terminal carboxy group content, is exemplified by melt polycondensation by which PBT that satisfies these properties is directly obtainable by properly selecting conditions for manufacturing PBT. Although such conditions can widely vary depending on process and apparatus and thus cannot be generalized, a possible method may be such as using a relatively small-scale apparatus for manufacturing PBT (for example in a 1 m$^3$ polymerization tank), and conducting polycondensation within a relatively short time while properly adjusting the amount of catalyst, manufacturing temperature, degree of vacuum and so forth.

According to a known practice, the final stage of polycondensation of the copolymer-containing PBT is conducted at a temperature around 245°C, and at a pressure around 0.13 to 0.4 kPa. Under such ordinary conditions for prior manufacture of PBT in an industrial scale (for example in a 4 m$^3$ polymerization tank), the obtainable PBT usually has a terminal carboxy group content of approximately 20 to 40 equivalent/ton, exceeding the range specified by this invention.

In contrast according to the manufacture of PBT in this embodiment, the obtainable PBT will have the melting point lower than that of the prior PBT, whereby the temperature of the polycondensation step may be lowered. The polycondensation step is preferably conducted while setting the final stage temperature around 235°C, which is lower than in the prior method, and setting the pressure to a low level of approximately 0.13 kPa, which is high degree of vacuum. Polycondensation reaction time is preferably set to approximately 2 to 4 hours.

<Reactive Compound (B)>

The resin composition of this invention preferably contains the reactive compound. With the reactive compound contained therein, sublimate will be more easily suppressed from generating during powder additive manufacturing, and shaping of 3D structure will tend to become easier. The reactive compound is preferably a compound that can chemically react with carboxy group or hydroxy group at the PBT terminal to cause crosslinking reaction or chain elongation, and more preferably has therein epoxy group or carbodiimide group. The reactive compound is preferably one or more kinds selected from the group consisting of epoxy compound, carbodiimide compound, compound having oxazoline group (ring), compound having oxazine group (ring), compound having carboxy group, and compound having amido group; more preferably at least one kind selected from epoxy compound and carbodiimide compound; and even more preferably epoxy compound. With the reactive compound mixed therein, polymer chain of PBT can be elongated before shaping, making it possible to suppress variation of molecular weight due to thermal history during shaping, and to adjust the value ($\alpha$) defined by formula [1] to 40 or smaller.

The reactive compound (B) used in this invention preferably has a reactive group equivalent of 100 to 1000 g/eq. Now, the reactive group, for example in the epoxy compound, means epoxy group. The reactive compound (B) preferably has two or more reactive groups per molecule, and preferably has 1 to 100 reactive groups per molecule.

«Epoxy Compound»

The epoxy compound is a sort of compound having one or more epoxy groups per molecule, exemplified by glycidyl compound, epoxy compound having aromatic ring, and alicyclic epoxy compound, and preferably contains at least epoxy compound having aromatic ring.

Specific examples of the epoxy compound include epoxy compounds having aromatic ring such as bisphenol A-type epoxy compound (including bisphenol A diglycidyl ether), bisphenol F-type epoxy compound (including bisphenol F diglycidyl ether), biphenyl-type epoxy compound (including bis(glydicyloxy)biphenyl), resorcine-type epoxy compound (including resorcinol diglycidyl ether), novolac-type epoxy compound, benzoic acid glycidyl ester, terephthalic acid diglycidyl ester, and orthophthalic acid diglycidyl ester; (di)glycidyl ethers such as methyl glycidyl ether, butyl glycidyl ether, 2-ethylhexyl glycidyl ether, decyl glycidyl ether, stearyl glycidyl ether, phenyl glycidyl ether, butyl phenyl glycidyl ether, allyl glycidyl ether, neopentyl glycol diglycidyl ether, ethylene glycol diglycidyl ether, glycerin diglycidyl ether, and propylene glycol diglycidyl ether; paraffinic (for example, saturated fatty acid-based) or olefinic (for example, unsaturated fatty acid-based) (di)glycidyl esters such as sorbic acid glycidyl ester, adipic acid diglycidyl ester, epoxy-modified linseed oil, and epoxy-modified soybean oil; alicyclic epoxy compounds such as vinylcyclohexene dioxide, and dicyclopentadiene oxide; and epoxy-modified styrene-acrylate copolymer.

Among them, styrene-acrylate copolymer, bisphenol A-type epoxy compound, novolac-type epoxy compound, bisphenol F-type epoxy compound, biphenyl-type epoxy compound and so forth, having glycidyl group in the side chain are preferred; and styrene-acrylate copolymer and bisphenol A-type epoxy compound, having glycidyl group in the side chains thereof, are particularly preferred.

Commercially available product is exemplified by "Joncryl ADR4368C" (trade name, from BASF SE), and Epikote 1003 (trade name, from Mitsubishi Chemical Corporation).

The epoxy compound preferably has a weight-average molecular weight of 15,000 or smaller, which is more preferably 10,000 or smaller. With the weight-average molecular weight controlled at or below such upper limit value, the epoxy compound will have improved compatibility with PBT, whereby the obtainable shaped article will tend to further improve the strength. The lower limit value of the weight-average molecular weight, although not specifically limited, is preferably 100 or above, which is more preferably 500 or above.

The epoxy compound preferably has an epoxy equivalent of 100 g/eq or larger or 100 g/mol or larger, which is more preferably 200 g/eq or larger or 200 g/mol or larger, and even more preferably 300 g/eq or larger or 300 g/mol or larger. Meanwhile, the epoxy compound preferably has an epoxy equivalent of 1500 g/eq or smaller or 1500 g/mol or smaller, which is more preferably 900 g/eq or smaller or 900 g/mol or smaller, and even more preferably 800 g/eq or smaller or 800 g/mol or smaller.

With the epoxy equivalent controlled to the aforementioned lower limit value or above, the viscosity of the resin composition can be effectively increased. With the epoxy equivalent controlled to the aforementioned upper limit value or below, dispersibility during melt kneading may be improved, thereby making the reaction more efficient.

«Carbodiimide Compound»

The resin composition of this invention also preferably contains the carbodiimide compound as the reactive compound. The carbodiimide compound is a sort of compound having a carbodiimide group (-N=C=N-) per molecule. The carbodiimide compound employable here may be any of aliphatic carbodiimide compound having an aliphatic principal chain, alicyclic carbodiimide compound having alicyclic principal chain, and aromatic carbodiimide compound having aromatic principal chain. Among them, preferred for use is the aliphatic carbodiimide compound which excels in reactivity with the polymer terminal. The carbodiimide compound may be either of monomer type or polymer type, wherein the polymer type is preferred in this invention.

The aliphatic carbodiimide compound is exemplified by diisopropylcarbodiimide and dioctyldecylcarbodiimide.

The alicyclic carbodiimide compound is exemplified by dicyclohexylcarbodiimide, and poly(4,4'-dicyclohexylmethanecarbodiimide), wherein poly(4,4'-dicyclohexylmethanecarbodiimide) is preferred.

Commercially available product includes "Carbodilite" (trade name, from Nisshinbo Chemical Inc.).

The aromatic carbodiimide compound is exemplified by mono- or dicarbodiimide compounds such as diphenylcarbodiimide, di-2,6-dimethyl phenylcarbodiimide, N-triyl-N' -phenylcarbodiimide, di-p-nitrophenylcarbodiimide, di-p-aminophenylcarbodiimide, di-p-hydroxyphenylcarbodiimide, di-p-chlorophenylcarbodiimide, di-p-methoxyphenylcarbodiimide, di-3,4-dichlorophenylcarbodiimide, di-2,5-dichlorophenylcarbodiimide, di-o-chlorophenylcarbodiimide, p-phenylene-bis-di-o-triylcarbodiimide, *p*-phenylene-bis-dicyclohexylcarbodiimide, p-phenylene-bis-di-p-chlorophenylcarbodiimide, and ethylene-bis-diphenylcarbodiimide; and

polycarbodiimide compounds such as poly(4,4'-diphenylmethanecarbodiimide), poly(3,5'-dimethyl-4,4'-biphenylmethanecarbodiimide), poly(p-phenylenecarbodiimide), poly(m-phenylenecarbodiimide), poly(3,5'-dimethyl-4,4'-diphenylmethanecarbodiimide), poly(naphthylenecarbodiimide), poly(1,3-diisopropylphenylenecarbodiimide), poly(1-methyl-3,5-diisopropylphenylenecarbodiimide), poly(1,3,5-triethylphenylenecarbodiimide) and poly(triisopropylphenylenecarbodiimide). Two or more kinds of these compounds may also be used in a combined manner.

The carbodiimide preferably has a weight-average molecular weight of 10,000 or smaller, which is more preferably 4,000 or smaller, meanwhile the lower limit value is preferably 100 or above, and more preferably 500 or above.

Content of carbodiimide group in the carbodiimide compound, in terms of carbodiimide equivalent (weight of carbodiimide compound [g] that gives 1 mol of carbodiimide group), is preferably 100 g/mol or larger, more preferably 200 g/mol or larger, and even more preferably 235 g/mol or larger. The upper limit value is preferably 1000 g/mol, more preferably 800 g/mol or below, and even more preferably 650 g/mol or below. Use within these range can stably control the reactivity with the polymer.

«Compound Having Oxazoline Group (Ring)»

The compound having oxazoline group (ring) is exemplified by oxazoline, alkyloxazoline (alkyloxazoline having 1 to 4 carbon atoms, such as 2-methyloxazoline and 2-ethyloxazoline), and bisoxazoline compound.

The bisoxazoline compound is exemplified by:

2,2'-bis(2-oxazoline) ;
2,2'-bis(alkyl-2-oxazoline) [2,2'-bis(C$_{1-6}$ alkyl-2-oxazoline) such as 2,2'-bis(4-methyl-2-oxazoline), 2,2'-bis(4-ethyl-2-oxazoline), and 2,2'-bis(4,4-dimethyl-2-oxazoline)];
2,2'-bis(aryl-2-oxazoline) [2,2'-bis(4-phenyl-2-oxazoline), etc.] ;
2,2'-bis(cycloalkyl-2-oxazoline) [2,2'-bis(4-cyclohexyl-2-oxazoline), etc.];
2,2'-bis(aralkyl-2-oxazoline) [2,2'-bis(4-benzyl-2-oxazoline), etc.] ;
2,2' -alkylenebis (2-oxazoline) [2,2' -C$_{1-10}$ alkylenebis (2-oxazoline) such as 2,2'-ethylenebis(2-oxazoline), and 2,2'-tetramethylenebis(2-oxazoline)] ;

2,2' -alkylenebis (alkyl-2-oxazoline) [2,2' -C$_{1-10}$ alkylenebis(C$_{1-6}$ alkyl-2-oxazoline) such as 2,2'-ethylenebis(4-methyl-2-oxazoline), and 2,2'-tetramethylenebis(4,4-dimethyl-2-oxazoline)] ;

2,2'-arylenebis (2-oxazoline) [2,2'-(1,3-phenylene)-bis(2-oxazoline), 2,2'-(1,4-phenylene)-bis(2-oxazoline), 2,2'-(1,2-phenylene)-bis(2-oxazoline), 2,2'-diphenylenebis(2-oxazoline), etc.];

2,2' -arylenebis(alkyl-2-oxazoline) [2,2' -phenylene-bis(C$_{1-6}$ alkyl-2-oxazoline) such as 2,2'-(1,3-phenylene)-bis(4-methyl-2-oxazoline), and 2,2'-(1,4-phenylene)-bis(4,4-dimethyl-2-oxazoline)] ;

2,2'-aryloxyalkanebis(2-oxazoline) [2,2'-9,9'-diphenoxyethanebis(2-oxazoline), etc.];

2,2'-cycloalkylenebis(2-oxazoline) [2,2'-cyclohexylenebis(2-oxazoline), etc.];

N,N' -alkylenebis (2-carbamoyl-2-oxazoline) [N,N' -C$_{1-10}$ alkylenebis(2-carbamoyl-2-oxazoline) such as N,N'-ethylenebis(2-carbamoyl-2-oxazoline), and N,N'-tetramethylenebis(2-carbamoyl-2-oxazoline)] ;

N,N'-alkylenebis(2-carbamoyl-alkyl-2-oxazoline) [N,N'- C$_{1-10}$ alkylenebis (2-carbamoyl-C$_{1-6}$ alkyl-2-oxazoline) such as N,N'-ethylenebis(2-carbamoyl-4-methyl-2-oxazoline), and N,N'-tetramethylenebis(2-carbamoyl-4,4-dimethyl-2-oxazoline)]; and

N,N'-arylenebis(2-carbamoyl-2-oxazoline) [N,N'-phenylenebis(2-carbamoyl-oxazoline), etc.].

The compound having oxazoline group also include vinyl polymer having oxazoline group [Epocros RPS Series, RAS Series, RMS Series, etc. from Nippon Shokubai Co., Ltd.]. Among these oxazoline compounds, bisoxazoline compound is preferred.

«Compound Having Oxazine Group (Ring)»

The compound having oxazine group (ring) employable here includes oxazine and bisoxazine compounds.
The bisoxazine compound is exemplified by:

2,2'-bis(5,6-dihydro-4H-1,3-oxazine);, 2,2'-bis(alkyl-5,6-dihydro-4H-1,3-oxazine) [2,2'-bis(C$_{1-6}$ alkyl-5,6-dihydro-4H-1,3-oxazine) such as 2,2'-bis(4-methyl-5,6-dihydro-4H-1,3-oxazine), 2,2'-bis(4,4-dimethyl-5,6-dihydro-4H-1,3-oxazine), and 2,2'-bis(4,5-dimethyl-5,6-dihydro-4H-1,3-oxazine)] ;

2,2' -alkylenebis (5,6-dihydro-4H-1,3-oxazine) [2,2' -C$_{1-10}$ alkylenebis(5,6-dihydro-4H-1,3-oxazine) such as 2,2'-methylenebis(5,6-dihydro-4H-1,3-oxazine), 2,2'-ethylenebis(5,6-dihydro-4H-1,3-oxazine), and 2,2'-hexamethylenebis(5,6-dihydro-4H-1,3-oxazine)] ;

2,2'-arylenebis(5,6-dihydro-4H-1,3-oxazine) [2,2'-(1,3-phenylene)-bis(5,6-dihydro-4H-1,3-oxazine), 2,2'-(1,4-phenylene)-bis(5,6-dihydro-4H-1,3-oxazine), 2,2'-(1,2-phenylene)-bis(5,6-dihydro-4H-1,3-oxazine), 2,2'-naphthylenebis(5,6-dihydro-4H-1,3-oxazine), and 2,2'-diphenylenebis(5,6-dihydro-4H-1,3-oxazine)];

N,N'-alkylenebis(2-carbamoyl-5,6-dihydro-4H-1,3-oxazine) [N,N'-C$_{1-10}$ alkylenebis(2-carbamoyl-5,6-dihydro-4H-1,3-oxazine) such as N,N'-ethylenebis(2-carbamoyl-5,6-dihydro-4H-1,3-oxazine), and N,N'-tetramethylenebis(2-carbamoyl-5,6-dihydro-4H-1,3-oxazine)];

N,N'-alkylenebis(2-carbamoyl-alkyl-5,6-dihydro-4H-1,3-oxazine) [N,N' -C$_{1-10}$ alkylenebis (2-carbamoyl-C$_{1-6}$ alkyl-5,6-dihydro-4H-1,3-oxazine) such as N,N'-ethylenebis(2-carbamoyl-4-methyl-5,6-dihydro-4H-1,3-oxazine), and N,N'-hexamethylenebis(2-carbamoyl-4,4-dimethyl-5,6-dihydro-4H-1,3-oxazine)]; and

N,N'-arylenebis(2-carbamoyl-5,6-dihydro-4H-1,3-oxazine) [N,N'-phenylenebis(2-carbamoyl-oxazine), etc.]. From among these oxazine compounds, preferred is bisoxazine compounds.

«Compounds Having Carboxy Group»
The compound having carboxy group (carboxylic acid compound) is exemplified by formic acid, acetic acid, propionic acid, acrylic acid, methacrylic acid, oxalic acid, malonic acid, succinic acid, maleic acid, fumaric acid, adipic acid, benzoic acid, phthalic acid, terephthalic acid, lactic acid, malic acid, tartaric acid, diphenolic acid, benzenesulfonic acid, toluenesulfonic acid, dodecyl benzenesulfonic acid, nonylbenzenesulfonic acid, nitrobenzenesulfonic acid, cyanobenzenesulfonic acid, hydroxybenzenesulfonic acid, methylsulfonic acid, trifluoromethanesulfonic acid, trifluoroacetic acid, nitrobenzenecarboxylic acid, cyanobenzenecarboxylic acid, hydroxybenzenecarboxylic acid, hydroxyacetic acid and salts thereof.

«Compound Having Amido Group»

The compound having amido group is exemplified by (meth)acrylamide, N-methyl methacrylamide, metylolized acrylamide, methylolized methacrylamide, ureido vinyl ether, β-ureidoisobutyl vinyl ether, and ureidoethyl acrylate.
The resin composition of this invention, when containing the reactive compound (B), preferably contains 0.01 parts by mass or more of such reactive compound (B) per 100 parts by mass of PBT (A), the content is more preferably 0.05 parts by mass or more, and even more preferably 0.1 parts by mass or more. With the content controlled to the lower limit value or above, degree of crosslinkage among the individual components may be properly controlled during preparation of the resin composition, fluidity during shaping may further be improved, and the sublimate is more easily prevented from generating during powder additive manufacturing. Meanwhile, the upper limit value of the content of reactive compound, per 100 parts by mass of PBT, is preferably 3 parts by mass or below, which is more preferably 2.8 parts by mass or below, and even more preferably 2.5 parts by mass or below.

The reactive compound may be used singly, or in combination of two or more kinds. When two or more kinds are used, the total content preferably falls within the aforementioned ranges.

<Stabilizer (C)>

The resin composition of this invention preferably contains a stabilizer.

The stabilizer is exemplified by phenol-based stabilizer, amine-based stabilizer, phosphorus-containing stabilizer and thioether-based stabilizer. Among them, phosphorus-containing stabilizer and phenol-based stabilizer are preferred in this invention, and phenol-based stabilizer is more preferred.

The phenol-based stabilizer is preferably hindered phenol-based stabilizer, which is exemplified by pentaerythritoltetrakis[3-(3,5-di-tert-butyl-4-hydroxyphenyl) propionate], octadecyl-3-(3,5-di-tert-butyl-4-hydroxyphenyl) propionate, thiodiethylenebis[3-(3,5-di-tert-butyl-4-hydroxyphenyl) propionate], N,N'-hexane-1,6-diylbis[3-(3,5-di-*tert*-butyl-4-hydroxyphenyl)propionamide], 2,4-dimethyl-6-(1-methyl pentadecyl)phenol, diethyl[[3,5-bis(1,1-dimethyl ethyl)-4-hydroxyphenyl]methyl]phosphonate, 3,3',3",5,5',5"-hexa-*tert*-butyl-a,a',a"-(mesitylene-2,4,6-triyl)tri-*p*-cresol, 4,6-bis(octylthiomethyl)-o-cresol, ethylenebis(oxyethylene)bis[3-(5-tert-butyl-4-hydroxy-m-tolyl) propionate], hexamethylenebis[3-(3,5-di-*tert*-butyl-4-hydroxyphenyl) propionate], 1,3,5-tris(3,5-di-*tert*-butyl-4-hydroxybenzyl)-1,3,5-triazine-2,4,6(1H,3H,5H)-trione, 2,6-di-*tert*-butyl-4-(4,6-bis(octylthio)-1,3,5-triazine-2-ylamino)phenol, and 2-[1-(2-hydroxy-3,5-di-*tert*-pentylphenyl)ethyl]-4,6-di-tert-pentylphenyl acrylate.

Among them, pentaerythritoltetrakis[3-(3,5-di-*tert*-butyl-4-hydroxyphenyl) propionate], octadecyl-3-(3,5-di-*tert*-butyl-4-hydroxyphenyl) propionate, and pentaerythritoltetrakis(β-lauryl-thio propionate) are preferred. Such phenol-based antioxidant is specifically exemplified by "Irganox 1010" and "Irganox 1076" (trade names, same will apply hereinafter) from BASF SE; and "ADK STAB AO-50", "ADK STAB AO-60" and "ADK STAB AO-412S" from ADEKA Corporation. Note that only one kind of the hindered phenol-based stabilizer may be contained, or two or more kinds may be contained on the basis of free combination in freely selectable ratio.

Content of the stabilizer, per 100 parts by mass of PBT (A), is preferably 0.01 parts by mass or more, more preferably 0.05 parts by mass or more, even more preferably 0.08 parts by mass or more, and yet more preferably 0.1 parts by mass or more. The upper limit value is preferably 5 parts by mass or below, more preferably 4 parts by mass or below, and even more preferably 3 parts by mass or below. With the content controlled to the lower limit value or above, the heat stability may be improved, whereas controlled to the upper limit value or below, the gas emission may be effectively suppressed, thereby suppressing nonconformities during 3D printing.

<Other Components>

The resin composition of this invention may contain resin component or additives, other than the aforementioned components.

Such other resin component is exemplified by thermoplastic resin such as polyester resins other than PBT.

Such other additive is exemplified by nucleating agent, flow improver, antioxidant, anticolorant, pigment, dye, UV absorber, infrared absorber, mold releasing agent, lubricant, flame retarder, antistatic agent, inorganic fiber, organic fiber, inorganic particle and organic particle.

The flame retarder is exemplified by compounds described in paragraphs [0033] to [0040] of JP-2015-025127A, which are incorporated by reference into the present patent specification.

Melting point of the resin composition of this invention, although not specifically limited, is preferably 150°C or higher, in view of further improving the heat resistance of the obtainable shaped article, which is more preferably 175°C or higher, and even more preferably 180°C or higher. On the other hand, in view of more effectively reducing energy consumption necessary for melting the material during shaping, the melting point is preferably 227°C or lower, more preferably 216°C or lower, even more preferably 215°C or lower, yet more preferably 213°C or lower, furthermore preferably 210°C or lower, still more preferably 205°C or lower, again more preferably 199°C or lower, and particularly 195°C or lower.

The resin composition of this invention preferably demonstrates high tensile strength when shaped into the shaped article. More specifically, the resin composition of this invention preferably demonstrates a tensile strength of 25 MPa or larger, when shaped into an 1BA specimen in compliance with JIS K7161, under conditions including a forming table temperature of 185°C and a pitch of 0.1 mm, and measured in compliance with ISO 527 at a test temperature of 23°C, a tensile speed of 50 mm/min, and a chuck distance of 45 mm, which is more preferably 28 MPa or larger. The upper limit of the tensile strength is practically 200 MPa or smaller, although not specifically limited thereto.

<Resin Composition and Manufacture Thereof>

The resin composition may be manufactured, for example, by mixing and melt-kneading the individual components, while the method is not specifically limited so long as the individual components will be finally contained. More specifically, the resin composition may be manufactured typically by preliminarily mixing polybutylene terephthalate (PBT) (A), the reactive compound (B), the stabilizer (C), and optional components by using any of a variety of mixers such as tumbler, Henschel mixer or the like, followed by melt-kneading by using Banbury mixer, roll mixer, Brabender, single-screw kneader extruder, twin-screw kneader extruder, kneader or the like.

Alternatively, the resin composition of this invention may also be manufactured, for example, by preliminarily mixing only a part of the components, rather than all components, and then by feeding the mixture through a feeder into an extruder for melt-kneading.

Still alternatively, a desired resin composition may be manufactured, for example, by preliminarily mixing a part of components, feeding the mixture to an extruder for melt-kneading to obtain a resin composition called masterbatch, and by mixing the masterbatch again with the residual components, followed by melt-kneading.

Heating temperature for melt-kneading is properly selectable usually within the range from 220 to 300°C. Since too high temperature would promote degradation of the resin or emission of decomposition gas, so that it is desirable to properly select a screw structure in consideration of shear heating and so forth. Antioxidant and heat stabilizer are preferably used for the purpose of suppressing decomposition during shaping in subsequent steps.

<Powderization of Resin Composition>

The resin composition manufactured by the aforementioned processes is preferably extruded into pellets, and then powderized for convenience of use in powder additive manufacturing. That is, this invention relates to a powder made of the resin composition, for use in powder additive manufacturing. Means for powderization may be any of ball mill, jet mill, stamp mill, freeze grinding and so forth, without special limitation. Jet mill is particularly preferred for its high grinding efficiency. Particle size achieved by grinding is preferably 20 to 150 $\mu$m (more preferably 35 to 150 $\mu$m), in terms of average particle size determined by a certain classification means such as screening or fluid classification.

<Shaping Method>

The shaped article is obtainable by powder additive manufacturing, by using the resin composition of this invention (powder). Shaping method applicable here is any of known methods having been practiced in powder additive manufacturing, and is not specifically limited. An exemplary method is such as manufacturing the shaped article with use of a powder material made of the resin composition of this invention, by using a commercially available powder additive manufacturing apparatus.

More specifically, the shaping may be conducted by using the powder additive manufacturing apparatus that includes a shaping stage; a film forming unit that forms a thin film of a powder material on the shaping stage; a heating unit that heats the formed thin film typically by irradiating thereon laser light, so as to fuse particles of the powder material and to form a shaped article layer; an moving unit that moves the shaping stage in the direction of stacking layers (vertical direction); and a control unit that controls these units to repeat film formation, heating and shifting of the stage, thereby enabling stacking of the shaped article layers. Referring now to one specific example with use of laser heating, according to a preferred embodiment of this invention, the shaping is enabled by steps (1) to (4) below:

(1) step of forming a thin film of a powder material;
(2) step of selectively irradiating laser light on the thin film which is kept preheated, to form a shaped article layer made of fused powder material;
(3) step of moving down the shaping stage by a distance equivalent to the thickness of shaped article layer thus formed; and
(4) step of repeating steps (1) to (3) in this order multiple times, to stack the shaped article layers.

In step (1), a thin film of a powder material is formed. For example, the powder material fed from a powder feeding unit is spread flat over the shaping stage with use of a recoater. The thin layer is formed directly on the shaping stage, or in contact with the powder material having already been spread, or in contact with the shaped article layer having already been formed.

Thickness of the thin layer may be determined depending on the thickness of the shaped article layer. The thickness of the thin layer is usually around 0.01 to 0.3 mm, although freely selectable depending on accuracy of the 3D shaped article to be manufactured.

In step (2), laser is selectively irradiated on a point on the thus formed thin film where the shaped article layer needs to be formed, so as to melt and fuse the powder material at the irradiated point. This makes the adjoining powder material fuse to form a fused body which constitutes the shaped article layer. In this process, since the powder material energized by the laser can also fuse with the layer having already been formed, thus also causing adhesion of adjoining layers. The powder material not irradiated by the laser is collected as excessive powder, and recycled as recovered powder.

Step (2) may alternatively be conducted without selective irradiation of laser, by selectively spraying a melt accelerator (component that accelerates melt of resin) and a surface decorator (component that forms outline of the layer), and by irradiating the entire range with an infrared lamp, xenon lamp, halogen lamp or the like, to thereby melt and fuse the powder material. Similarly to the case of using laser, the powder material not consumed for melting and fusion is collected as excessive powder, and recycled as recovered powder.

In step (3), the shaping stage is moved down by a distance equivalent to the thickness of the shaped article layer formed in step (2), and kept standby for the next step (1).

With use of the resin composition of this invention, release of the sublimate during powder additive manufacturing may be suppressed, whereby the powder will not mutually fuse so excessively, thus improving appearance or characteristic of the shaped article.

The resin composition of this invention is preferably applied to powder additive manufacturing conducted in an inert gas atmosphere. The inert gas atmosphere herein means a condition that, in a space in which a heat process takes place, an inert gas accounts for 90% (vol%) or more of a gas other than that derived from the resin composition of this invention, wherein the percentage is more preferably 92% or larger, even more preferably 95% or larger, yet more preferably 98%, and furthermore preferably 99% or more. The inert gas is exemplified by nitrogen and argon.

In the recent scene of powder additive manufacturing, there are some approaches of shaping in air atmosphere, in place of the inert gas atmosphere, aimed at reducing cost for apparatus, and easiness of handling. These benefits are effectively demonstrated also when the resin composition of this invention is used. Now the air atmosphere means a naturally-occurred air composed of approximately 21 vol% of oxygen and the residual part mostly composed of inert gases including nitrogen gas. Benefits of using the resin composition of this invention is also effectively demonstrated in an atmosphere with an intermediate oxygen concentration between those in the inert gas atmosphere and the air atmosphere, on the basis of which this invention shall, however, not be interpreted restrictively.

Temperature of a shaping area in powder additive manufacturing is preferably 5 to 20°C lower than the melting point of the resin composition to be employed, and the shaping time may be suitably determined depending on the size of shaped article.

<Applications of Shaped Article>

The shaped article of this invention is formed from the resin composition of this invention. The shaped article of this invention may be widely employed for miscellaneous applications. More specifically, the shaped article is particularly suitable for electrical equipment, electronic equipment, parts thereof and so forth; which are exemplified by electric/electronic equipment parts with mechanical contact such as relay, switch, connector, breaker, electromagnetic switch, terminal switch, sensor, actuator, micro switch, micro sensor and micro actuator; and enclosure of the electric/electronic equipment.

EXAMPLES

This invention will be further detailed below referring to Examples, to which this invention is not limited without departing from the spirit thereof.

<Method for Preparing Polybutylene Terephthalate Resin A1 (PBT A1)>

To an esterification tank equipped with a stirrer, a nitrogen feed port, a heating device, a thermometer and a distillation tube, placed were 793.6 parts by mass of dimethyl terephthalate, 75.4 parts by mass of isophthalic acid, 613.8 parts by mass of 1,4-butanediol, and tetrabutyl titanate as a catalyst (33 ppm by mass in titanium element conversion relative to the producible polymer).

The mixture is kept under stirring, and heated from 150°C to 210°C over 90 minutes, and then kept at 210°C for 90 minutes. Transesterification and esterification reactions were thus allowed to proceed for 180 minutes in total, while distilling off methanol and water produced therein.

Fifteen minutes before the end of transesterification and esterification reactions, 48 ppm by mass, in magnesium metal conversion relative to the producible polymer, of magnesium acetate tetrahydrate and an antioxidant ("Irganox 1010", from BASF SE) (whose amount accounts for 0.15% by mass of the producible polymer) were added, and tetrabutyl titanate (whose amount in titanium element conversion accounts 61 ppm by mass of the producible polymer) was further added.

The reaction product was transferred into a polycondensation tank equipped with a stirrer, a nitrogen feed port, a heating device, a thermometer, a distillation tube and an evacuation port, and was allowed therein to proceed melt-polycondensation reaction under reduced pressure.

In the melt polycondensation reaction, pressure in the tank was slowly reduced from normal pressure down to 0.13 KPa over 85 minutes, and the reaction was allowed to proceed at 0.13 KPa or lower. The reaction temperature was kept at 210°C over 15 minutes after the start of evacuation, then elevated up to 235°C over 45 minutes, and kept at this temperature. The reaction was terminated upon arrival at a predetermined stirring torque. The polycondensation reaction took 200 minutes.

Next, inner pressure of the tank was recovered with nitrogen gas from the depressurized state, and then pressurized to draw out the polymer. The polymer was extruded through an extruder cap into strands, the strands were cooled in a cooling water bath, and then cut by using a strand cutter to produce pellets. A copolymer PBT with an isophthalic acid content of 10 mol% was thus obtained.

This copolymer PBT was manufactured while employing higher temperature and lower ultimate pressure in the final stage of polycondensation, as compared with manufacturing conditions employed usually in the industry.

Next, the obtained copolymer PBT was milled by using a jet mill, and then screened to obtain a powder with an average particle size of 80 $\mu$m.

The copolymer PBT powder was found to have a melting point of 210°C, a terminal carboxy group content of 14 equivalent/ton, a glass transition temperature of 48°C, and an intrinsic viscosity of 0.85 dL/g.

<Method for Manufacturing Polybutylene Terephthalate Resins A2 to A4>

Copolymer PBT and homo PBT of each of PBTs A2 to A4 were obtained in the same way as in the aforementioned method of manufacturing PBT A1, except that the composition and amount of the copolymerizable component were changed.

The resin compositions of this invention were manufactured by using the components listed in Table 1 below.

[Table 1]

| Component | | Simbol | |
|---|---|---|---|
| (A) Polybutylene terephthalate resin | | A1 | Acid component: terephthalic acid 90 mol% / isophthalic acid 10 mol%<br>Diol component: 1,4-butanediol, used for polymerization<br>Intrinsic viscosity = 0.85 dL/g, Terminal carboxy group content = 14 eq/ton,<br>Melting point = 210°C, Glass trnasition temperature = 48°C |
| | | A2 | Acid component: terephthalic acid 80 mol% / isophthalic acid 20 mol%<br>Diol component: 1,4-butanediol, used for polymerization<br>Intrinsic viscosity = 0.85 dL/g, Terminal carboxy group content = 14 eq/ton,<br>Melting point = 195°C, Glass trnasition temperature = 46°C |
| | | A3 | Acid component: terephthalic acid 100 mol%<br>Diol component: 1,4-butanediol, used for polymerization<br>Intrinsic viscosity = 0.85 dL/g, Terminal carboxy group content = 14 eq/ton,<br>Melting point = 225°C, Glass trnasition temperature = 50°C |
| | | A4 | Acid component: terephthalic acid 100 mol%<br>Diol component: 1,4-butanediol, used for polymerization<br>Intrinsic viscosity = 1.13 dL/g, Terminal carboxy group content = 11 eq/ton,<br>Melting point = 225°C, Glass trnasition temperature = 50°C |
| (B) Reactive compound | | B1 | Joncryl ADR4368C (trade name), from BASF SE<br>Styrene-acrylate copolymer having glycidyl group in side chains<br>Weight-average molecular weight (Mw) = 6100 - 7500, Epoxy equivalent = 270 - 300 g/mol |
| | | B2 | Epikote 1003 (trade name), from Mitsubishi Chemical Corporation<br>Bisphenol A-type epoxy compound<br>Weight-average molecular weight = 1300, Epoxy equivalent = 670 - 770 g/eq |
| | | B3 | Carbodilite LA-1, from Nisshinbo Chemical Inc.<br>Aliphatic polycarbodiimide<br>Weight-average molecular weight = 6000, Carbodiimide equivalent = 247 g/mol |
| (C) Stabilizer | | C | Irganox 1010, from BASF SE<br>Pentaerythritoltetrakis[3-(3,5-di-tert-butyl-4-hydroxyphenyl) propionate] |

<Measurement of Terminal Carboxy Group Content>

For pretreatment before being analyzed, each sample (PBT pellet) was milled, dried in a hot air drier at 120°C for 15 minutes, cooled in a desiccator down to room temperature, and 0.1 g of the sample was precisely weighed in a test tube. Three milliliters of benzyl alcohol was added thereto, and the content was allowed to dissolve at 195°C for 3 minutes while blowing therein dry nitrogen gas, 5 mL of chloroform was then gradually added, and the content was allowed to cool down to room temperature. To the solution, 1 or 2 droplets of phenol red indicator was added and, the content was kept stirred under blowing of dry nitrogen gas, and titrated with a 0.1 N sodium hydroxide solution in benzyl alcohol, which was terminated upon change of color from yellow to red. A blank was also prepared by the same operations but without dissolving the sample. The terminal carboxy group content was calculated by the equation below:

$$\text{Terminal carboxy group content (equivalent/ton)} = (a - b) \times 0.1 \times f/w$$

where, "a" represents volume of a 0.1 N sodium hydroxide solution in benzyl alcohol (μL) required for titration, "b" represents volume of a 0.1 N sodium hydroxide solution in benzyl alcohol (μL) required for titrating the blank, w represents the amount of sample (g), and f represents titer of a 0.1 N sodium hydroxide solution in benzyl alcohol.

Now, the titer (f) of a 0.1 N sodium hydroxide solution in benzyl alcohol was determined by a method below.

Five milliliters of methanol was sampled in a test tube, one or two droplets of phenol red solution in ethanol was added as an indicator, and the content was titrated to a point of color change with 0.4 mL of a 0.1 N sodium hydroxide solution in benzyl alcohol. Next, 0.2 mL of an aqueous 0.1 N hydrochloric acid solution with a known titer was sampled and added as a standard solution, and the content was titrated again to a point of color change with a 0.1 N sodium hydroxide solution in benzyl alcohol. All operations were conducted under blowing of dry nitrogen gas. The titer (f) was calculated from the equation below.

[Mathematical Formula 1]

$$\text{Titer (f)} = \frac{[\text{Titer of 0.1 N aqueous hydrochloric acid solution} \times \text{sampled volume of 0.1 N aqueous hydrochloric acid solution (μL)}]}{[\text{Titration volume of 0.1 N sodium hydroxide solution in benzyl alcohol solution (μL)}]}$$

<Measurement of Melting Point of PBT>

Five to seven milligrams of each sample (PBT pellet) was filled in a sample pan to prepare a measurement pan. The measurement pan was then heated by using a differential scanning calorimeter under a nitrogen atmosphere, from 30°C to 300°C at a heating rate of 20°C/min. The measurement pan was then kept at 300°C for 3 minutes, cooled down from 300°C down to 30°C at a cooling rate of 20°C/min, kept at 30°C for 3 minutes, and subsequently heated from 30°C to 300°C at a heating rate of 20°C/min. A DSC curve obtained in measurement during the second heating was analyzed, and a temperature where an endothermic peak becomes deepest was determined as the melting point. In a case where two or more endothermic peak appear, the temperature corresponded to the deepest peak was employed.

The differential scanning calorimeter employed here was "PYRIS Diamond DSC" from PerkinElmer Inc.

<Measurement of Glass Transition Temperature of PBT>

A test specimen of 5 mm wide, 50 mm long and 1 mm thick was injection-molded at a resin temperature of 250°C and a die temperature of 60°C. The obtained test specimen was measured by using a solid viscoelasticity analyzer RSA-III (from TA Instruments), in Dynamic Temp Sweep mode, at a frequency of 1 Hz, a temperature of 0 to 120°C (3°C/min) and a stress of 0.05%, and an observed temperature at which Tanδ peaked was determined as the glass transition temperature.

Example 1 to 7 and Comparative Example 1 to 5

For Examples and Comparative Examples, the individual components listed in Table 1 were blended according to amounts summarized in Table 2 (all in parts by mass), kneaded in a twin-screw extruder ("TEX30α", from The Japan Steel Works, Ltd.) at a barrel preset temperature of 250°C and a screw rotation speed of 200 rpm, extruded into strands, cooled in a water bath, and formed into pellets by using a pelletizer. Comparative Examples 4 and 5 could not be extruded, and were therefore not obtainable in pellets.

The obtained resin compositions (pellets) were subjected to measurement of MVR (melt volume flow rate) before and after the heat process. Results are summarized in Table 2. Temperature for the heat process was set to a temperature 20°C lower than the melting point of PBT.

<Measurement of Melting Point of PBT Resin Composition>

Five to seven milligrams of a sample (pellet of PBT resin composition) was filled in a sample pan to prepare a measurement pan. The measurement pan was then heated by using a differential scanning calorimeter under a nitrogen atmosphere, from 30°C to 300°C at a heating rate of 20°C/min. The measurement pan was then kept at 300°C for 3 minutes, cooled down from 300°C down to 30°C at a cooling rate of 20°C/min, kept at 30°C for 3 minutes, and subsequently heated from 30°C to 300°C at a heating rate of 20°C/min. A DSC curve obtained in measurement during the second heating was analyzed, and a temperature where an endothermic peak becomes deepest was determined as the melting point. In a case where two or more endothermic peak appear, the temperature corresponded to the deepest peak was employed.

The differential scanning calorimeter employed here was "PYRIS Diamond DSC" from PerkinElmer Inc.

<Measurement of MVR>

Each sample (resin composition pellet) was subjected to measurement of melt volume flow rate ($MVR_0$, in $cm^3$/10 min.) with use of a melt indexer, while setting the measurement temperature 25°C higher than the melting point of the resin composition, and setting the load to 2.16 kg.

On the other hand, 10 g of each sample was placed in an aluminum cup, and allowed to stand for heat process for 24 hours in an oven set at a heat process temperature listed in Table 2 (20°C lower than the melting point of PBT).

Immediately after the heat process, $MVR_1$ of PBT was measured.

The melt indexer employed here was Melt Indexer G-02, from Toyo Seiki Seisaku-Sho, Ltd.

The oven employed here was Perfect Oven PHH-202, from ESPEC Corporation.

<Sublimate Suppressive Effect>

Five grams of each sample (resin composition pellet) was placed in a test tube ($\varphi20 \times 120$ mm), and set in a fogging tester (EB-603 from AS ONE Corporation, and middle sized thermostat chamber L-75, modified, from GL Sciences Inc.) conditioned at 180°C. The test tube was capped with a lid made of a heat resistance glass (Tempax glass, $\varphi$ 25 $\times$ 2 mm thick), the heat-resistant glass part was conditioned in a 25°C atmosphere, and subjected to the heat process at 160°C for 5 hours, and further for 20 hours. After the heat process, the heat-resistant glass plate was found to have an adhered matter of sublimate derived typically from decomposition products of the resin composition, deposited on the inner surface thereof. The adhered matter was visually judged according to the criteria below, and haze of the heat-resistant glass plate after the heat process was measured with use of Haze Meter "NDH-4000" from Nippon Denshoku Industries Co., Ltd., which was employed as an index of sublimate suppressive effect:

A: almost no adhered matter;
B: slight adhered matter; and
C: lot of adhered matter.

[Table 2]

| | | | Example 1 | Example 2 | Exmaple 3 | Example 4 |
|---|---|---|---|---|---|---|
| (A) PBT | | A1 | 100 | | | |
| | | A2 | | 100 | 100 | 100 |
| | | A3 | | | | |
| | | A4 | | | | |

(continued)

| | | Example 1 | Example 2 | Exmaple 3 | Example 4 |
|---|---|---|---|---|---|
| (B) Reactive compound | B1 | 0.2 | 0.2 | | |
| | B2 | | | 1.0 | |
| | B3 | | | | 1.0 |
| (C) Stabilizer | C | 0.1 | 0.1 | 0.1 | 0.1 |
| Melting point of PBT (°C) | | 210 | 195 | 195 | 195 |
| Melting point of resin composition (°C) | | 210 | 195 | 195 | 195 |
| MVR | $MVR_0$ (cm$^3$/10min) | 20 | 22 | 24 | 21 |
| | $MVR_1$ (cm$^3$/10min) | 18 | 16 | 19 | 16 |
| | $\alpha$ (%) | 10 | 27 | 21 | 24 |
| Sublimate suppresive effect | Visual judgment | A | A | A | A |
| | Haze after heated for 5 hours (%) | 0.50 | 0.90 | 1.1 | 1.4 |
| | Haze after heated for 20 hours (%) | 3.3 | 3.4 | 3.6 | 4.0 |
| | | Example 5 | Example 6 | Comparative Example 1 | Compartive Example 2 |
| (A) PBT | A1 | | | 100 | |
| | A2 | 100 | | | 100 |
| | A3 | | | | |
| | A4 | | 100 | | |
| (B) Reactive compound | B1 | | | | |
| | B2 | 2.0 | | | |
| | B3 | | | | |
| (C) Stabilizer | C | 0.1 | 0.1 | 0.1 | 0.1 |
| Melting point of PBT (°C) | | 195 | 225 | 210 | 195 |
| Melting point of resin composition (°C) | | 195 | 225 | 210 | 195 |
| MVR | $MVR_0$ (cm$^3$/10min) | 20 | 14 | 45 | 29 |
| | $MVR_1$ (cm$^3$/10min) | 16 | 11 | 21 | 14 |
| | $\alpha$ (%) | 20 | 21 | 53 | 52 |
| Sublimate suppresive effect | Visual judgment | A | B | C | C |
| | Haze after heated for 5 hours (%) | 0.80 | 2.0 | 3.6 | 3.0 |
| | Haze after heated for 20 hours (%) | 3.1 | 5.5 | 7.3 | 7.1 |

(continued)

| | | Compartive Example 3 | Example 7 | Compartive Example 4 | Compartive Example 5 |
|---|---|---|---|---|---|
| (A) PBT | A1 | | | | |
| | A2 | | 100 | 100 | 100 |
| | A3 | 100 | | | |
| | A4 | | | | |
| (B) Reactive compound | B1 | | | | |
| | B2 | | | | 4.0 |
| | B3 | | 2.0 | 4.0 | |
| (C) Stabilizer | C | 0.1 | 0.1 | | |
| Melting point of PBT (°C) | | 225 | 195 | | |
| Melting point of resin composition (°C) | | 225 | 195 | | |
| MVR | $MVR_0$ (cm$^3$/ 10min) | 27 | 17 | Extrusion not possible | Extrusion not possible |
| | $MVR_1$ (cm$^3$/ 10min) | 14 | 14 | | |
| | $\alpha$ (%) | 48 | 13 | | |
| Sublimate suppresive effect | Visual judgment | C | A | | |
| | Haze after heated for 5 hours (%) | 3.4 | 1.3 | | |
| | Haze after heated for 20 hours (%) | 7.0 | 3.8 | | |

All contents are given in parts by mass.

It is clear that Examples 1 to 7 could successfully suppress difference of MVR between before and after the heat process, as compared with Comparative Examples 1 to 3. This can consequently suppress changes of the physical property between the early stage and later stage of the heat process in powder additive manufacturing. Moreover, referring to the rate of change of haze depending on the difference of heating time between Example 1 and Comparative Example 1, Example 1 was confirmed to successfully suppress release of sublimate during the heat process. Also other Examples were confirmed to successfully suppress release of sublimate.

Comparative Examples 4 and 5 could not be extruded and obtainable in pellets, and therefore could not be evaluated in various aspects.

Example 8

To the composition of Example 2, further added were 0.3 parts by mass of aluminum oxide (AEROSIL Alu C 805, from Nippon Aerosil Co., Ltd.) and 0.3 parts by mass of carbon black (SGP-10, from SEC Carbon, Ltd.), per 100 parts by mass of polybutylene terephthalate, whereby a resin composition was obtained.

Comparative Example 6

To the composition of Comparative Example 2, further added were 0.3 parts by mass of aluminum oxide (AEROSIL Alu C 805, from Nippon Aerosil Co., Ltd.) and 0.3 parts by mass of carbon black (SGP-10, from SEC Carbon, Ltd.), per 100 parts by mass of polybutylene terephthalate, whereby a resin composition was obtained.

<Method for Evaluating Shaped Article>

<<Manufacture of Shaped Article>>

The formed articles were manufactured by using the resin compositions of Example 8 and Comparative Example 6, and tensile strength was measured in the same way as described above regarding evaluation of the formed article.

More specifically, each 1BA tensile test specimen in compliance with JIS K7161 was manufactured by using a printer for powder additive manufacturing, under conditions including a shaping table temperature of 185°C and a pitch of 0.1 mm, whereby the test specimen for tensile strength test was manufactured.

The printer for powder additive manufacturing employed here was Lisa Pro (from Sinterit sp.z o.o.).

«Measurement of Tensile Strength»

The thus manufactured 1BA tensile test specimen was subjected to measurement of tensile strength in compliance with ISO 527 at a test temperature of 23°C, a tensile speed of 50 mm/min, and a chuck distance of 45 mm.

Tensile strength of the shaped article of Example 8 was found to be 31.6 MPa, meanwhile that of the shaped article of Comparative Example 6 was found to be 24.4 MPa. Example 8 was confirmed to be superior to Comparative Example 6, in terms of mechanical strength of the shaped article.

Shaping based on powder additive manufacturing would occasionally need to preheat the powder material for a long time, during which the sublimate and so forth, if released in large quantities from the powder, would cause sticking among particles or would degrade fluidity or the powder, thereby adversely affecting appearance of strength of the shaped article. Considering this, this invention is capable of suppressing changes of the physical property, such as release of the sublimate, between the early stage and later stage of the heat process in powder additive manufacturing, and is therefore beneficial for three-dimensional (3D) printing.

INDUSTRIAL APPLICABILITY

The resin composition of this invention is suitably applicable to powder additive manufacturing that belongs to three-dimensional (3D) printing technology, and is industrially applicable.

**Claims**

1.  A resin composition comprising a polybutylene terephthalate that contains a terephthalic acid-derived structural unit and a 1,4-butanediol-derived structural unit, for use in powder additive manufacturing,
    the resin composition having a value ($\alpha$), defined by mathematical formula [1] below, of 40 or smaller:

$$\alpha = \left| (MVR_1 - MVR_0)/MVR_0 \right| \times 100 \quad \cdots [1]$$

where,

MVR$_0$: melt volume flow rate (in cm$^3$/10 min) measured at a temperature 25°C higher than a melting point of the resin composition before a heat process, and under a 2.16 kg load; and

MVR$_1$: melt volume flow rate (in cm$^3$/10 min) measured at a temperature 25°C higher than the melting point of the resin composition after he heat process conducted for 24 hours at a temperature 20°C lower than the melting point of polybutylene terephthalate, and under a 2.16 kg load.

2.  The resin composition of claim 1, wherein the value ($\alpha$) given by mathematical formula [1] is 10 or larger and 30 or smaller.

3.  The resin composition of claim 1 or 2, wherein the polybutylene terephthalate contains the terephthalic acid-derived structural unit, the 1,4-butanediol-derived structural unit, and other structural unit other than these units.

4.  The resin composition of any one of claims 1 to 3, wherein the polybutylene terephthalate has a melting point of 150 to 227°C.

5.  The resin composition of any one of claims 1 to 4, wherein the polybutylene terephthalate has a terminal carboxy group content of 1 to 18 equivalent/ton.

6. The resin composition of any one of claims 1 to 5, containing 0.01 to 3 parts by mass of a reactive compound, per 100 parts by mass of the polybutylene terephthalate.

7. The resin composition of claim 6, wherein the reactive compound is at least one kind selected from epoxy compound or carbodiimide compound.

8. A resin composition comprising a polybutylene terephthalate that contains a terephthalic acid-derived structural unit and a 1,4-butanediol-derived structural unit, and 0.01 to 3 parts by mass of a reactive compound per 100 parts by mass of the polybutylene terephthalate, for use in powder additive manufacturing.

9. The resin composition of claim 8, wherein the polybutylene terephthalate contains the terephthalic acid-derived structural unit, the 1,4-butanediol-derived structural unit, and other structural unit other than these units.

10. The resin composition of claim 8 or 9, wherein the polybutylene terephthalate has a melting point of 150 to 227°C.

11. The resin composition of any one of claims 8 to 10, wherein the polybutylene terephthalate has a terminal carboxy group content of 1 to 18 equivalent/ton.

12. The resin composition of any one of claims 8 to 11, wherein the reactive compound is at least one kind selected from epoxy compound or carbodiimide compound.

13. A pellet comprising the resin composition described in any one of claims 1 to 12, for use in powder additive manufacturing.

14. A powder comprising the resin composition described in any one of claims 1 to 12, for use in powder additive manufacturing.

15. A method for manufacturing a shaped article, the method comprising obtaining a shaped article by powder additive manufacturing, with use of the powder described in claim 14.

16. A shaped article obtained by powder additive manufacturing, with use of the powder described in claim 14.

## INTERNATIONAL SEARCH REPORT

International application No.

PCT/JP2020/003559

| A. CLASSIFICATION OF SUBJECT MATTER |
|---|
| C08K 5/1515(2006.01)i; C08K 5/29(2006.01)i; C08L 67/02(2006.01)i; C08L 63/00(2006.01)i; B33Y 10/00(2015.01)i; B33Y 80/00(2015.01)i; B29C 64/153(2017.01)i; C08G 63/183(2006.01)i; B33Y 70/00(2020.01)i |
| FI:      B29C64/153; C08L63/00 A; C08G63/183; C08K5/29; C08K5/1515; B33Y80/00; B33Y70/00; B33Y10/00; C08L67/02 |
| According to International Patent Classification (IPC) or to both national classification and IPC |

| B. FIELDS SEARCHED |
|---|
| Minimum documentation searched (classification system followed by classification symbols) |
| C08K5/1515; C08K5/29; C08L67/02; C08L63/00; B33Y10/00; B33Y70/00; B33Y80/00; B29C64/153; C08G63/183 |

| Documentation searched other than minimum documentation to the extent that such documents are included in the fields searched |
|---|
| Published examined utility model applications of Japan   1922-1996 |
| Published unexamined utility model applications of Japan   1971-2020 |
| Registered utility model specifications of Japan   1996-2020 |
| Published registered utility model applications of Japan   1994-2020 |

| Electronic data base consulted during the international search (name of data base and, where practicable, search terms used) |
|---|
|  |

| C. DOCUMENTS CONSIDERED TO BE RELEVANT |
|---|

| Category* | Citation of document, with indication, where appropriate, of the relevant passages | Relevant to claim No. |
|---|---|---|
| Y | JP 2019-1154 A (RICOH CO., LTD.) 10.01.2019 (2019-01-10) paragraphs [0001]-[0091] | 1-16 |
| Y | JP 2017-100809 A (DAINIPPON PRINTING CO., LTD.) 08.06.2017 (2017-06-08) paragraph [0049] | 1-16 |
| Y | JP 2014-12822 A (MITSUBISHI CHEMICAL CORP.) 23.01.2014 (2014-01-23) paragraphs [0003]-[0069] | 1-16 |

☐ Further documents are listed in the continuation of Box C.     ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 31 March 2020 (31.03.2020) | 07 April 2020 (07.04.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

Information on patent family members

International application No.

PCT/JP2020/003559

| Patent Documents referred in the Report | Publication Date | Patent Family | Publication Date |
|---|---|---|---|
| JP 2019-1154 A | 10 Jan. 2019 | US 2018/0355144 A1 paragraphs [0002]-[0137] | |
| JP 2017-100809 A | 08 Jun. 2017 | (Family: none) | |
| JP 2014-12822 A | 23 Jan. 2014 | US 2015/0087034 A1 paragraphs [0002]-[0097] | |

Form PCT/ISA/210 (patent family annex) (January 2015)

23

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016121013 A
- WO 2017179139 A
- JP 6033994 B
- JP 2015025127 A